# EUROPEAN PATENT SPECIFICATION

(11) **EP 2 992 974 B1**
(45) Date of publication and mention of the grant of the patent: **18.07.2018**
(21) Application number: 14888257.4
(22) Date of filing: 19.12.2014
(51) Int. Cl.: B09B 1/00, E02D 27/01, E02D 27/32

(54) **FINAL DISPOSAL PLANT**
ANLAGE ZUR ENDGÜLTIGEN ENDABLAGERUNG
INSTALLATION DE MISE EN DÉCHARGE DÉFINITIVE

(30) Priority: 21.10.2014 JP 2014214737; 21.10.2014 JP 2014214738; 21.10.2014 JP 2014214739
(43) Date of publication of application: 09.03.2016
(73) Proprietor: Fuji Corporation Co., Ltd., Saku-shi, Nagano 385-0009 (JP)
(72) Inventor: YAMAGUCHI, Tokichiro, Saku-shi Nagano 385-0009 (JP)
(74) Representative: Hofmann, Ralf U.
(86) International application number: PCT/JP2014/083735
(87) International publication number: WO 2015/151356

(56) References cited:
- EP-A1- 2 620 231
- JP-A- 2002 143 801
- JP-A- 2002 143 801
- JP-A- 2003 236 490
- JP-A- 2003 340 391
- JP-A- 2003 340 391
- JP-A- 2008 173 570
- JP-A- 2008 173 570
- JP-B1- 5 250 724
- JP-B1- 5 320 519
- JP-B1- 5 444 496

## Description

### TECHNICAL FIELD

The present invention relates to a final disposal site for the landfill disposal of wastes as a compressed solidification.

### BACKGROUND ART

In a disposal site for the landfill disposal of wastes, there is a need to take countermeasures to prevent leachate produced from landfill disposal wastes from leaking to the outside. Hitherto, as such a countermeasure, a waterproof treatment using a water barrier sheet is performed on a wall surface of a landfill region constructed by concrete (for example, see Patent Document 1).

In the waste disposal site construction method disclosed in Patent Document 1, a concrete placement mold frame having a water barrier sheet attached thereto is provided to a wall surface of a concrete wall forming the landfill region so that the water barrier sheet faces the wall surface of the concrete wall. Then, the concrete is placed between the concrete wall and the water barrier sheet of the mold frame, and the mold frame is removed after a predetermined curing period. Subsequently, a resin material is sprayed to the exposed side surface of the water barrier sheet.

Further, as a waste landfill disposal method, there is also known a method which performs the landfill disposal by sequentially forming a compressed solidification by a banking material including wastes inside a landfill area (for example, see Patent Document 2). The banking material is prepared by kneading the wastes with cement or the like. Then, the compressed solidification is formed as a cement solidified member after the banking material is cured.

### CITATION LIST

### PATENT DOCUMENT

Patent Document 1: JP 2003-236490 A
Patent Document 2: JP 2014-061473 A
Patent Document 3:JP 2002 143801 A
Patent Document 4:JP 2003 340391 A
Patent Document 5:JP 2008 173570 A
Patent Document 6:EP 2 620 231 A1

### DISCLOSURE OF THE INVENTION

### PROBLEM TO BE SOLVED BY THE INVENTION

In the past, mercury contained in mercury containing wastes such as a used battery or a used fluorescent lamp (hereinafter, referred to as "mercury containing wastes") was collected or recovered for recycle as much as possible. However, since the demand for mercury will decrease drastically in near future, the mercury containing wastes will be treated as the landfill disposal without any recycle.

In this case, when the leachate leaks from the mercury containing wastes to the outside of the disposal site, there is a large influence on the peripheral environment of the disposal site compared to the case of the wastes not containing mercury. Accordingly, in a case where the landfill disposal of the mercury containing wastes is performed, there is a need to set up a stricter countermeasure against leakage compared to the case of the disposal site constructed by the related art.

Further, in a case where the landfill disposal of the mercury containing wastes is performed by forming the compressed solidification from the banking material including the mercury containing wastes, there is a need to sequentially and efficiently convey the banking material to each desired position inside the landfill area.

The invention is made in view of such problems of the conventional technology, and an object thereof is to provide a final disposal site suitable for the landfill disposal of mercury containing wastes in the form of a compressed solidification.

### MEANS FOR SOLVING PROBLEM

According to the invention, provided is a final disposal site including: a landfill area in which a plurality of landfill regions is set so that a banking material including wastes is fed and a compressed solidification of the banking material is sequentially formed and of which a periphery is defined by a side wall portion; and a building which accommodates the landfill area and a bottom portion being configured by a bottom plate structure, wherein the bottom plate structure includes a first waterproof structure which is provided on a ground and an RC layer which is provided on the first waterproof structure so as to define a bottom of the landfill area, wherein the first waterproof structure includes concrete and a waterproof unit, wherein the side wall portion is formed as a part integrated with the RC layer by reinforcement concrete using a reinforcement uprightly formed from the RC layer as a main reinforcement, wherein the surface of the integrated part is covered by a second waterproof structure, wherein the peripheral edge of the RC layer is provided with a vertical wall which is uprightly formed from the RC layer so as to be integrated with the RC layer, wherein a lower end surface of a side wall of the building is connected to an upper end surface of the vertical wall, wherein the second waterproof structure extends to an inner surface of the vertical wall, wherein the vertical wall, the side wall portion, and the RC layer form a concave area of which an upside is opened and an inside is covered by the second waterproof structure, and wherein a traveling path along which a ceiling hoist transporting the banking material forming the compressed solidification to the landfill region travels is provided on the second waterproof structure of a bottom portion of the concave area.

According to the invention, the building of which the bottom portion is formed by the bottom plate structure is provided, the bottom plate structure includes the RC layer and the first waterproof structure, and the landfill area is defined by the RC layer and the side wall portion. Then, the side wall portion is formed by using the reinforcement uprightly formed from the bottom portion of the RC layer as the main reinforcement, and the surface of the integrated part is covered by the second waterproof structure.

Thus, it is possible to effectively suppress the leachate from leaking from the compressed solidification including the wastes inside the landfill area into the ground by the first waterproof structure, the RC layer, and the second waterproof structure while suppressing the rainwater from intruding into the landfill area by the side wall portion, the second waterproof structure, and the building, and to stably keep the landfill area by the RC layer and the side wall portion.

Further, the concave area is formed so as to surround the outside of the side wall portion of the landfill area, and the traveling path through which the ceiling hoist travels is provided on the second waterproof structure of the bottom portion of the concave area. Accordingly, the concave area may be served as a buffer area which suppresses the rainwater from intruding into the landfill area and suppresses water from leaking from the landfill area to the outside of the building. Further, the concave area may be used to provide the traveling path for the ceiling hoist.

Thus, the ceiling hoist may be easily employed as a unit for conveying the banking material for forming the compressed solidification while ensuring the high shielding property of the landfill area with outside. Accordingly, it is possible to provide the final disposal site in which the landfill disposal of the mercury containing wastes is appropriately performed in the form of the compressed solidification.

In the invention, the concave area may be provided with a catch basin which collects and discharges water intruding thereinto without contacting to waste. Accordingly, since the rainwater which intrudes into the concave area is discharged to the outside without contacting to waste while being collected in the catch basin, it is possible to reliably realize the function of the concave area as the buffer area.

According to the invention, provided is a final disposal site including: a landfill area in which a plurality of landfill regions is set so that a banking material including wastes is fed and a compressed solidification of the banking material is sequentially formed and of which a periphery is defined by a side wall portion; and a building which accommodates the landfill area and a bottom portion being configured by a bottom plate structure, wherein the bottom plate structure includes a first waterproof structure which is provided on a ground and an RC layer which is provided on the first waterproof structure so as to define a bottom of the landfill area, wherein the first waterproof structure includes concrete and a waterproof unit, wherein the RC layer includes a plurality of reinforced concrete layers sequentially constructed from the lower layer side through each curing period, wherein the side wall portion is formed simultaneously with the reinforced concrete layer so as to be integrated with an uppermost reinforced concrete layer of the RC layer, by reinforcement concrete using a reinforcement uprightly formed from a bottom portion of the RC layer as a main reinforcement, and wherein a surface of the integrated part is covered by a second waterproof structure.

According to the invention, the building of which the bottom portion is formed by the bottom plate structure is provided, the bottom plate structure includes the first waterproof structure and the RC layer formed by the plurality of reinforced concrete layers, and the landfill area is defined by the RC layer and the side wall portion. Then, the side wall portion is simultaneously formed so as to be integrated with the uppermost reinforced concrete layer of the RC layer which uses the reinforcement uprightly formed from the bottom portion of the RC layer as the main reinforcement, and the surface of the integrated part is covered by the second waterproof structure.

Thus, it is possible to reliably suppress the rainwater from intruding into the landfill area by the side wall portion, the second waterproof structure, and the building. Further, it is possible to effectively suppress the seepage water from leaking from the compressed solidification including the wastes inside the landfill area to the ground by the first waterproof structure, the RC layer, and the second waterproof structure. Then, it is possible to stably keep the landfill area by the tough RC layer and the tough side wall portion.

For this reason, even when earthquake or the like occurs, it is possible to protect the landfill area while reliably keeping the waterproof effect and the water barrier effect of the first waterproof structure or the second waterproof structure. Accordingly, it is possible to reliably perform the landfill disposal of the mercury containing wastes without giving an influence on the environment.

In the invention, each reinforced concrete layer of the RC layer may be provided with an induction joint of which an upper surface is provided with an expandable joint material, and the induction joints of the reinforced concrete layers may be disposed at mutually different positions in a direction parallel to the upper surfaces.

Accordingly, since the induction joints of the reinforced concrete layers are deviated, the crack which is induced by the induction joint may be generated at different positions instead of concentrating at a specific position. Accordingly, it is possible to keep the toughness of the RC layer by preventing generation of the fault of the RC layer in the entire thickness direction of the RC layer regardless of the crack. Further, it is possible to effectively give the water barrier property to the RC layer and to keep the water barrier property regardless of the crack by the expandable joint material.

In the invention, the first waterproof structure may include a first concrete layer which is placed on the ground, the waterproof unit which is provided on the first concrete layer, and a second concrete layer which is placed on the waterproof unit, and the waterproof unit may include a water barrier sheet and two protection mats which interpose the water barrier sheet therebetween.

Accordingly, since the water barrier sheet is protected by the first concrete layer, the second concrete layer, and the protection mat, it is possible to highly reliably keep the water barrier property of the first waterproof structure.

Further, it is possible to highly reliably keep the water barrier property of the waterproof unit by both of the effect in which the fault of the RC layer formed on the first waterproof structure in the entire thickness direction is prevented and the effect in which the water barrier sheet is protected by the protection mat.

In the invention, the second waterproof structure may include an innermost water repellent layer, a waterproof layer which is formed by performing an FRP waterproof treatment on the outside of the water repellent layer, and a non-combustible coating which covers the waterproof layer. Accordingly, it is possible to keep the waterproof effect of the water repellent layer and the waterproof layer while preventing a fire accident or the like by the non-combustible coating.

According to the invention, provided is a waste disposal method of performing a landfill disposal of wastes by sequentially constructing a compressed solidification of a banking material including the wastes by a compressed solidification construction process in a plurality of landfill regions inside a landfill area formed on a bottom plate structure of a building of a final disposal site so that a periphery thereof is defined by a side wall portion while having a predetermined length, a predetermined width, and a predetermined height, wherein the bottom plate structure includes a first waterproof structure formed on a ground by concrete and a waterproof unit, and an RC layer defining a bottom of the landfill area, wherein the RC layer includes a plurality of reinforced concrete layers sequentially constructed on the first waterproof structure from a lower layer side through each curing period, wherein the side wall portion is formed simultaneously with the reinforced concrete layer so as to be integrated with the uppermost reinforced concrete layer of the RC layer by reinforcement concrete using a reinforcement uprightly formed from a bottom portion of the RC layer as a main reinforcement, wherein a ceiling hoist is provided inside the building, wherein a surface of the integrated part is covered by a second waterproof structure, wherein the compressed solidification construction process includes a waste conveying step of conveying the wastes into a cement kneading room which is provided inside the building and of which an exit and an entrance can be air-tightly closed so that an air-tight state is maintained, a banking material preparing step of preparing a banking material by kneading mercury containing wastes conveyed into the cement kneading room in the air-tight state in the waste conveying step while adding cement and water to the mercury containing wastes, a dam disposing step of disposing a dam at an opened side surface of the landfill region where the compressed solidification is to be formed so that the dam closes the side surface, a conveying input step of conveying the banking material prepared in the banking material preparing step from the cement kneading room so as to input the banking material into the landfill region where the dam is disposed in the dam disposing step, and a compressed solidification forming step of forming the compressed solidification of the banking material in the landfill region into which the banking material is input in the conveying input step, and wherein the conveying input step includes a transfer step of transferring the banking material prepared in the banking material preparing step to a container, a conveying step of conveying the container to a delivery position of the ceiling hoist outside the cement kneading room after the transfer step, a transporting step of transporting the container conveyed to the delivery position in the conveying step to the landfill region where the dam is disposed in the dam disposing step by the using the ceiling hoist, and an input step of inputting the banking material inside the container transported to the landfill region in the transporting step into the landfill region.

According to the invention, the banking material is prepared in a manner such that the wastes conveyed into the cement kneading room are kneaded with cement and water while the air-tightness of the cement kneading room is kept in the compressed solidification construction process. Accordingly, even when the wastes are the mercury containing wastes, it is possible to prevent a problem in which the mercury element contained in the wastes is scattered to the outside of the cement kneading room during the kneading operation and the scattered mercury element gives a bad influence on an operator inside the final disposal site or on the periphery of the final disposal site.

Further, since the landfill disposal of the wastes is performed in the form of the compressed solidification that is formed by the banking material while the wastes are kneaded with cement and water, it is possible to prevent as much as possible the mercury contained in the wastes from leaking to the outside of the landfill area after the landfill disposal.

Further, since the banking material which is prepared in the cement kneading room is transferred to the container and is conveyed to the landfill region by the ceiling hoist so as to be input from the container into the landfill region in the conveying input step of the compressed solidification construction process, it is possible to efficiently and stably input the banking material prepared in the cement kneading room into the landfill region.

Further, since the landfill area is defined by the side wall portion and the RC layer as described above, it is possible to hold and keep the compressed solidification constructed in the landfill region while reliably suppressing the rainwater from intruding into the landfill area by the side wall portion, the second waterproof structure, and the building. At that time, it is possible to effectively suppress the leachate from leaking from the compressed solidification including the wastes inside the landfill area into the ground by the second waterproof structure, the RC layer, and the first waterproof structure. Then, it is possible to stably keep the landfill area by the tough RC layer and the tough side wall portion.

For this reason, even when earthquake or the like occurs, it is possible to protect the landfill area while reliably keeping the waterproof effect and the water barrier effect of the first waterproof structure or the second waterproof structure. Accordingly, even when the wastes are the mercury containing wastes, it is possible to reliably perform the landfill disposal of the mercury containing wastes without giving an influence on the peripheral environment. Accordingly, the waste disposal method of the invention may be sufficiently used to perform the landfill disposal for the mercury containing wastes.

In the invention, the compressed solidification forming step may include a compacting step of compacting the banking material input into the landfill region in the conveying input step, an upper capping forming step of forming an upper capping layer by leveling a coating material composed of a cement kneaded material on the banking material compacted in the compacting step and leveling and compacting crushed stone on the leveled coating material, a curing step of placing a weight pressurizer on the upper capping layer formed in the upper capping forming step and curing the upper capping layer and the banking material therebelow for a predetermined curing period, and a side surface capping forming step of forming a side surface capping layer by removing the weight pressurizer and the dam after the curing step and thickly applying a coating on the surface of the banking material which was contacting the dam.

Accordingly, it is possible to form the compressed solidification that is cured enough by the curing operation and to form the compressed solidification at a different landfill region located at the adjacent upper or lateral position by using the upper surface or the side surface of the compressed solidification smoothened by the upper capping layer and the side surface capping layer.

In the invention, induction joints provided with an expandable joint material may be disposed on the upper surfaces of the reinforced concrete layers of the RC layer so as to be located at different positions in a direction following the upper surfaces among each reinforced concrete layer.

Accordingly, since the induction joints of the reinforced concrete layers are deviated, the crack which is induced by the induction joint may be dispersed instead of being generated at a specific position. Accordingly, it is possible to keep the toughness of the RC layer by preventing generation of the fault of the RC layer in the entire thickness direction regardless of the crack. Further, it is possible to effectively give the water barrier property to the RC layer and to keep the water barrier property regardless of the crack by the expandable joint material. Accordingly, it is possible to perform the disposal of the wastes while highly reliably preventing the influence on the peripheral environment even when the wastes are the mercury containing wastes.

### BRIEF DESCRIPTION OF DRAWINGS

FIG. 1 is a perspective view illustrating a final disposal site according to an embodiment of the invention;
FIG. 2 is a cross-sectional view taken along the line II-II of FIG. 1;
FIG. 3 is a perspective view illustrating an induction joint of each reinforced concrete layer of the RC layer of the final disposal site;
FIG 4 is a diagram illustrating reinforcements disposed in a side wall portion of a landfill area and an RC layer of a bottom plate structure;
FIG. 5 is a flowchart illustrating a compressed solidification construction process of constructing a compressed solidification in the final disposal site;
FIG. 6 is a flowchart illustrating a conveying input step in the compressed solidification construction process;
FIG. 7 is a flowchart illustrating a compressed solidification forming step in the compressed solidification construction process;
FIG. 8 is a perspective view illustrating a compressed solidification formed in the compressed solidification forming step;
FIG. 9 is a perspective view illustrating a state where a weight pressurizer is placed on a banking material provided with an upper capping layer in the compressed solidification forming step; and
FIG. 10 is a perspective view illustrating a state where the banking material is cured with the weight pressurizer placed thereon in the compressed solidification forming step.

### MODE(S) FOR CARRYING OUT THE INVENTION

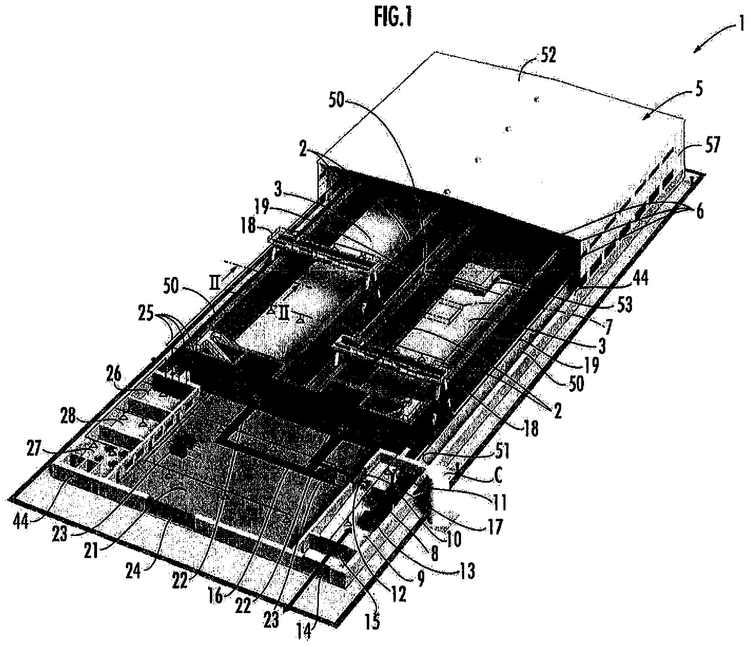

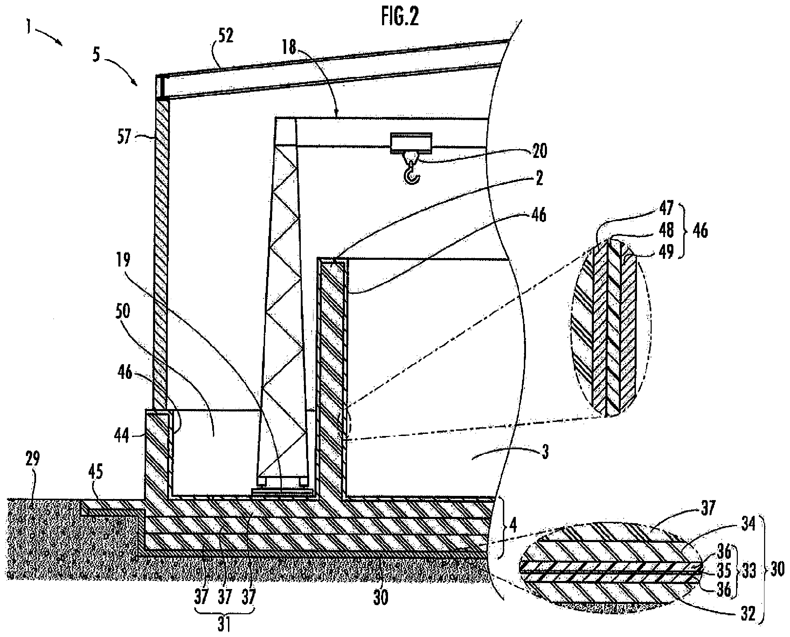

Hereinafter, an embodiment of the invention will be described with reference to the drawings. A final disposal site 1 of the embodiment uses a mercury waste disposal method, and may be also used for the safe landfill disposal of mercury containing wastes. As illustrated in FIG. 1, the final disposal site 1 includes two landfill areas 3 each of which is defined by side wall portions 2 and a building 5 of which a bottom portion is formed by a bottom plate structure 4 (see FIG. 2) so that the landfill areas 3 are housed therein.

The building 5 has a rectangular shape in the top view. The landfill areas 3 are disposed in parallel while each of the shapes along the horizontal plane is formed as an elongated rectangular shape in the longitudinal direction of the building 5.

In each landfill area 3, a plurality of landfill regions 7 is set so that a compressed solidification 6 of wastes is sequentially formed. In FIG. 1, only one landfill region 7 is indicated by the one-dotted chain line. A plurality of such rectangular landfill regions 7 are defined inside the landfill area 3 without any gap in the longitudinal direction, the lateral direction, and the vertical direction of the landfill area 3.

The compressed solidification 6 is formed in a manner such that a banking material 8 obtained by kneading wastes and cement is sequentially input into each landfill region 7 and is compacted and cured in a compact size. The building 5 includes therein a cement kneading room 9 which prepares the banking material 8 by kneading wastes and cement. A cement silo C which is used to supply kneading cement is provided outside the building 5 in the vicinity of the cement kneading room 9.

A kneading pit 10, a crane 11 capable of attaching a kneading bucket thereto, or a container 12 used to transport the banking material 8 is disposed inside the cement kneading room 9. A first gate 14 and a second gate 15 each of which is configured as an air-tight weight shutter are provided in a conveying path for a transportation vehicle 13 leading to the cement kneading room 9.

In the same way, an air-tight inner gate 17 is provided at an outlet to a transporting path 16 used to transport the banking material 8 from the cement kneading room 9. Accordingly, since the cement kneading room 9 is kept air-tightly, it is possible to prevent the mercury element from being scattered to the outside of the cement kneading room 9 while the wastes are kneaded.

At the outside of the side wall portion 2 of the landfill area 3, a traveling path 19 is provided for a traveling operation of a ceiling hoist 18 which transports the banking material 8 forming the compressed solidification 6 to the landfill region 7 inside the landfill area 3. When the ceiling hoist 18 travels along the traveling path 19 so that a hoist 20 (see FIG. 2) as a wind-up mechanism of the ceiling hoist 18 travels laterally, the container 12 which receives the banking material 8 may be transported to the landfill region 7 where the compressed solidification is formed.

A comparatively wide front space 21 is provided at the front surface side inside the building 5. A forklift 23 or the transporting path 16 used to transport the container 12 having the banking material 8 therein from the cement kneading room 9 to a delivery position 22 toward the ceiling hoist 18 is disposed in the front space 21. The front surface side of the front space 21 is formed as an entrance/exit door of the building 5, and is opened and closed by the air-tight weight shutter 24.

Further, an extinguishing equipment room 26 provided with extinguishing equipment that sends an inert gas to a necessary position inside the building 5 through a pipe line 25 is provided inside the building 5 for the case of emergency. In addition, a control room 27 or a warehouse 28 is provided inside the building 5.

FIG. 2 is a cross-sectional view taken along the line II-II of FIG. 1, and illustrates a cross-section of the bottom plate structure 4 of the building 5. As illustrated in FIG 2, the bottom plate structure 4 includes a first waterproof structure 30 which is provided on a ground 29 and an RC layer 31 which is provided on the first waterproof structure 30.

The ground 29 is improved in advance by a ground improving method such as a replacement method, a shallow layer mixing treatment method, and a deep layer mixing treatment method according to the property of the ground 29. The first waterproof structure 30 includes a first subslab concrete 32 which corresponds to a first concrete layer placed on the ground 29, a waterproof unit 33 which is provided on the first subslab concrete 32, and a second subslab concrete 34 which corresponds to a second concrete layer placed on the waterproof unit 33. The waterproof unit 33 includes a water barrier sheet 35 and two layers of protection mats 36 which interpose the water barrier sheet 35 therebetween.

The RC layer 31 is formed as three layers of reinforced concrete layers 37. The reinforced concrete layers 37 are constructed in order from the lower layer through a separate curing periods. The curing period of each reinforced concrete layer 37 is, for example, 28 days.

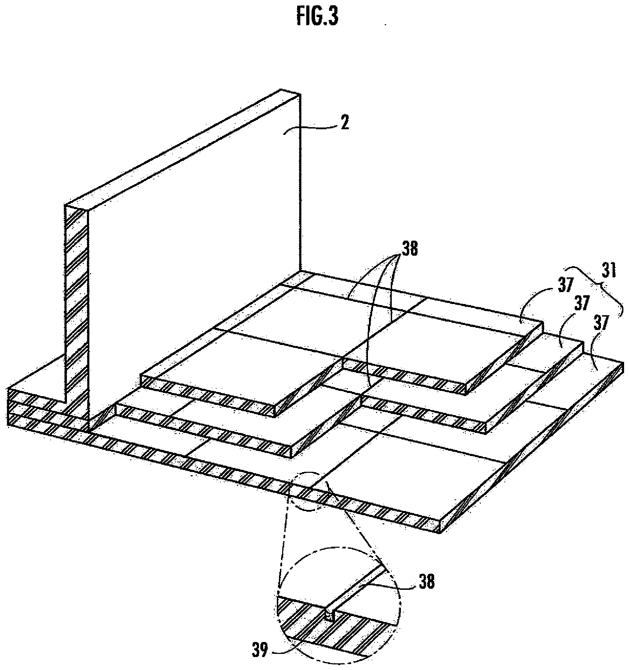

As illustrated in FIG. 3, an induction joint 38 is provided on the upper surface of each of the reinforced concrete layers 37 forming the RC layer 31. Further, in FIG 3, in order to easily understand the position of the induction joint 38 of each of the reinforced concrete layers 37, a second waterproof structure 46 to be described later (see FIG. 2) is not displayed, and each reinforced concrete layer 37 is displayed in a cut state at a position following the appropriate induction joint 38.

The induction joint 38 has, for example, a dimension with a width of 20 [mm] by a depth of 40 [mm]. An expandable joint material 39 is filled into the induction joint 38. The induction joints 38 of the reinforced concrete layers 37 are disposed at different positions in a direction parallel to the upper surfaces of the reinforced concrete layers 37. Specifically, the induction joints 38 of the reinforced concrete layers 37 are formed in a lattice shape at the same interval in the longitudinal and lateral directions, and the longitudinal or lateral line forming the lattice is parallel to the side wall portion 2. Then, the induction joints 38 of the reinforced concrete layers 37 are deviated from each other by 1/3 of the lattice interval.

For this reason, the cracks of the reinforced concrete layers 37 which are induced by the induction joints 38 are also deviated by 1/3 of the lattice interval. Accordingly, the cracked portion of one reinforced concrete layer 37 overlaps the non-cracked portion of the adjacent reinforced concrete layer 37. For this reason, the degradation of strength or flexibility of the RC layer 31 caused by the induced crack may be suppressed as low as possible. Further, also the waterproof effect of the expandable joint material 39 suppresses degradation in the moisture barrier property of the RC layer 31 caused by the crack.

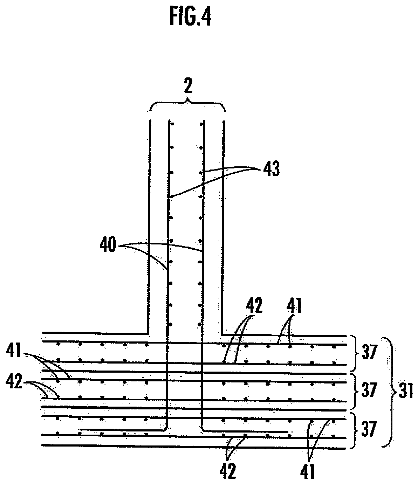

As illustrated in FIGs. 2 and 4, the side wall portion 2 which defines the landfill area 3 is simultaneously formed with the reinforced concrete layer 37 so as to be integrated with the uppermost reinforced concrete layer 37 of the RC layer 31 by the reinforcement concrete using a reinforcement uprightly formed from the bottom portion of the RC layer 31 as a main reinforcement 40. The bottom of the landfill area 3 is defined by the RC layer 31.

As illustrated in FIG. 4, the reinforcements of each of the reinforced concrete layers 37 forming the RC layer 31 include reinforcements 41 which are disposed at an upper side of the reinforced concrete layer 37 in a lattice shape in the longitudinal and lateral directions and reinforcements 42 which are disposed at lower side of the reinforced concrete layer in a lattice shape in the longitudinal and lateral directions. Then, a portion which extends in the horizontal direction of the main reinforcement 40 uprightly formed in an L-shape from the upside of the reinforcements 42 disposed in a lattice shape at the lower side of the lowermost reinforced concrete layer 37 is disposed so as to be perpendicular to the side wall portion 2.

The side wall portion 2 is formed as a wall of the reinforcement concrete which is reinforced by a reinforcement group at the inside (near the landfill area 3) of the lattice shape obtained by disposing the main reinforcement 40 and the horizontal reinforcement 43 extending in the horizontal direction along the side wall portion 2 and a reinforcement group at the outside (opposite to the landfill area 3) of the lattice shape obtained by disposing the main reinforcement 40 and the horizontal reinforcement 43 in the same way. The main reinforcement 40 also has a function of fixing the reinforced concrete layer 37 to each other.

As illustrated in FIG 2, the peripheral edge of the RC layer 31 is provided with a vertical wall 44 which is uprightly formed from the uppermost reinforced concrete layer 37 of the RC layer 31. The vertical wall 44 is simultaneously formed with the reinforced concrete layer 37 so as to be integrated with the uppermost reinforced concrete layer 37.

The outside of the vertical wall 44 is provided with an extension portion 45 in which only the uppermost reinforced concrete layer 37 of the RC layer 31 extends along the surface of the ground 29 by about 2 [m]. The extension portion 45 forms a step portion with respect to a portion of the RC layer 31 including three reinforced concrete layers 37. The first waterproof structure 30 between the ground 29 and the RC layer 31 is continuous to the extension portion 45 through the step portion.

The surface of the integrated part obtained by the RC layer 31, the side wall portion 2, and the vertical wall 44 is covered without any gap by the second waterproof structure 46 except for the outer surface of the vertical wall 44. A lower end surface of a side wall 57 of the building 5 is connected to an upper end surface of the vertical wall 44 through the second waterproof structure 46. The second waterproof structure 46 includes a water repellent layer 47 which is formed at the inside by applying a water repelling agent thereto, a waterproof layer 48 which is formed by performing a FRP waterproof treatment on the water repellent layer 47, and a non-combustible coating 49 which is located at the outermost side so as to coat the waterproof layer 48.

A concave area 50 of which the upside is opened and the inside is covered by the second waterproof structure 46 is formed by the vertical wall 44 around the building 5, the side wall portions 2 of the landfill areas 3, and the RC layer 31 of the bottom plate structure 4. As illustrated in FIG 1, a catch basin 51 which is used to discharge rainwater intruding thereinto is provided in the concave area 50.

Further, in FIG 1, only a part of the opposite side of the front surface of the building 5 is illustrated among the side wall 57 and a roof 52 of the building 5. However, in fact, the side wall 57 and the roof 52 of the building 5 cover the entire inside of the vertical wall 44 around the bottom plate structure 4.

Further, although the concave area 50 is hidden in the building 5 in FIG. 1, the concave area is also formed between the vertical wall 44 and the side wall portion 2 opposite to the front surface of the building 5 of each landfill area 3. Further, the concave area 50 is also formed between the opposing side wall portions 2 of the landfill areas 3. In FIG. 1, the concave areas 50 which are located at both sides of the building 5, the concave area 50 which is located opposite to the front surface, and the concave area 50 which is located between each landfill areas 3 are connected to each other in a W-shape. The traveling path 19 along which the ceiling hoist 18 travels is provided on the second waterproof structure 46 of the bottom portion of the concave area 50.

In this configuration, in a case where the landfill disposal for the mercury containing wastes is performed, cement or the like is first supplied from the cement silo C to the mercury containing wastes conveyed by the transportation vehicle 13 in the cement kneading room 9 of the building, and the mercury containing wastes and the cement are kneaded by the kneading bucket of the crane 11 so as to prepare the banking material 8. In the kneading operation, the first gate 14 and the second gate 15 are closed so that the cement kneading room 9 is kept in an air-tight state. Accordingly, it is possible to prevent the mercury element from being scattered to the outside during the kneading operation.

The prepared banking material 8 is fed into the container 12, is conveyed by the forklift 23 to the delivery position 22 through the inner gate 17 and the transporting path 16, and is conveyed by the ceiling hoist 18 from the delivery position 22 to the landfill region 7 where the compressed solidification 6 is formed. A dam 53 which closes the opened side surface of the landfill region 7 is disposed at the landfill region until the conveying operation ends.

The banking material 8 which is conveyed to the landfill region 7 is input from the container 12 into the landfill region 7. In this way, a weight pressurizer is placed on the banking material 8 which is filled in the landfill region 7 so that the banking material is cured for a predetermined curing period, and hence the compressed solidification 6 is formed. In this way, the compressed solidification 6 is sequentially formed in each of the landfill regions 7 of the landfill area 3.

Even when the weather changes in various ways during this operation, it is possible to suppress the rainwater from intruding into the landfill area 3 by the building 5, the vertical wall 44 around the building 5, the side wall portion 2 of the landfill area 3, the RC layer 31 of the bottom plate structure 4, and the second waterproof structure 46 provided in the RC layer 31, the side wall portion 2, and the vertical wall 44. Further, it is possible to suppress the seepage water from leaking from the wastes inside the landfill area 3 to the ground 29 or outside of the building 5 by the second waterproof structure 46 or the waterproof unit 33 of the first waterproof structure 30 provided below the RC layer 31.

Further, even when earthquake or the like occurs, the landfill area 3 is firmly kept by the RC layer 31 which improves the toughness or the water barrier property by the reinforced concrete layers 37 or the induction joints 38 or the side wall portion 2 which improves the toughness by the main reinforcements 40 uprightly formed from the bottom portion of the RC layer 31. Further, even when the RC layer 31 is cracked, the water barrier property of the RC layer 31 is effectively kept by the induction joint 38 of the RC layer 31. Further, even when earthquake or the like occurs, the water barrier effect and the waterproof effect of the first waterproof structure 30 or the second waterproof structure 46 are kept without any damage by the toughness of the RC layer 31 or the side wall portion 2.

Further, the ceiling hoist 18 travels so as to convey the banking material 8 while keeping the waterproof effect of the second waterproof structure 46 along the traveling path 19 provided on the second waterproof structure 46 of the concave area 50 outside the landfill area 3. Further, since the outside of the second waterproof structure 46 is formed of the non-combustible coating 49, the waterproof effect of the water repellent layer 47 and the waterproof layer 48 is kept without any big accident even in the event of fire or the like.

As described above, according to the embodiment, the building 5 of which the bottom portion is formed by the bottom plate structure 4 is provided, the bottom plate structure 4 includes the first waterproof structure 30 and the RC layer 31 including the plurality of reinforced concrete layers 37, and the landfill area 3 is defined by the RC layer 31 and the side wall portion 2. Then, the side wall portion 2 is formed so as to be integrated with the uppermost reinforced concrete layer 37 of the RC layer 31 having the reinforcement uprightly formed from the bottom portion of the RC layer 31 as the main reinforcement, and the surface of the integrated part is covered by the second waterproof structure 46.

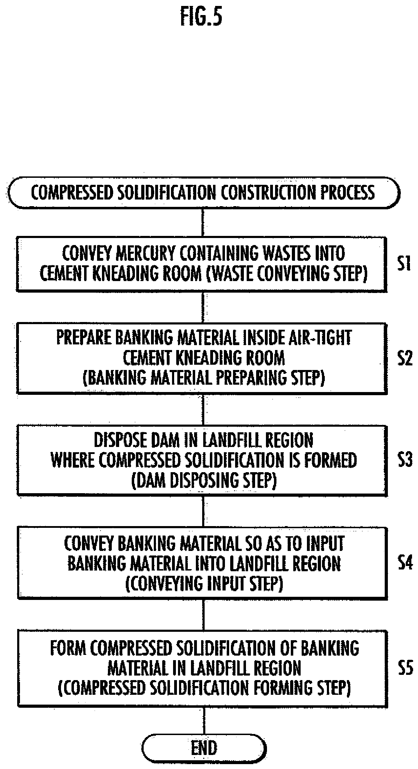

FIG. 5 illustrates a compressed solidification construction process which constructs the compressed solidification 6 of the banking material 8 containing mercury containing wastes. In a case where the compressed solidification 6 is constructed, a waste conveying step (step S1) is first performed so as to convey the mercury containing wastes into the cement kneading room 9 in the building 5 as illustrated in FIG. 5. The mercury containing wastes are conveyed by the transportation vehicle 13 through the first gate 14 and the second gate 15.

Next, a banking material preparing step (step S2) is performed so as to prepare the banking material 8 by kneading the mercury containing wastes conveyed into the cement kneading room 9, which becomes an air-tight state by closing the first gate 14, the second gate 15, the inner gate 17, and the like, while cement and water are added to the mercury containing wastes. This kneading operation is performed in a manner such that the mercury containing wastes, the cement from the cement silo C, and the water are inserted into the pit 10 and the mercury containing wastes, the cement, and the water are kneaded by the kneading bucket attached to the crane 11.

Next, a dam disposing step (step S3) is performed so as to dispose the dam 53, which closes the side surface, at the opened side surface of the landfill region 7 where the compressed solidification 6 is formed. For example, since two side surfaces of four side surfaces of the landfill region 7 are already closed by the side wall portion 2 of the landfill area 3 in a case where the compressed solidification 6 is first formed in the landfill region 7 of the corner of the landfill area 3, the other two side surfaces correspond to the opened side surfaces.

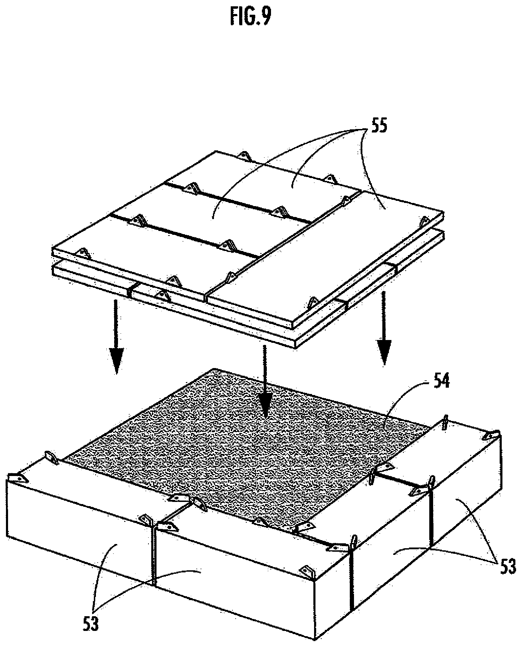

In this case, four rectangular parallelepiped dams 53 are disposed so as to close two opened side surfaces (see FIG. 9). Accordingly, the landfill region 7 is actually defined while only the upper surface thereof is opened, and hence the banking material 8 is fed from the upside thereof

Next, a conveying input step (step S4) is performed so as to convey and input the banking material 8 prepared by the banking material preparing step from the cement kneading room 9 into the landfill region 7 where the dams 53 are disposed.

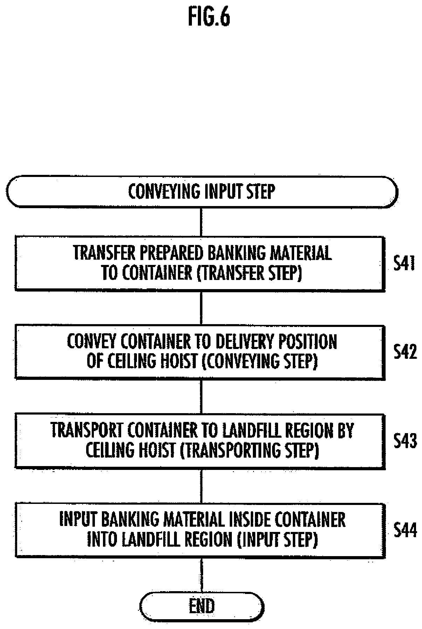

In the conveying input step, as illustrated in FIG 6, a transfer step (step S41) is first performed so as to transfer the banking material 8 prepared in the banking material preparing step to the container 12. This step may be performed by the bucket attached to the crane 11.

Next, a conveying step (step S42) is performed so as to convey the container 12 to the delivery position 22 with respect to the ceiling hoist 18 outside the cement kneading room 9. The conveying step is performed by the forklift 23 through the inner gate 17.

Next, a transporting step (step S43) is performed so as to transport the container 12 conveyed to the delivery position 22 to the landfill region 7 where the dams 53 are disposed, by the ceiling hoist 18. That is, the container 12 is lifted by the hoist 20 of the ceiling hoist 18, and the container 12 is transported to the landfill region 7 while the ceiling hoist 18 travels and the hoist 20 travels laterally.

Next, an input step (step S44) is performed so as to input the banking material 8 inside the container 12 transported to the landfill region 7 into the landfill region 7. This input step may be performed, for example, when an operator opens the bottom portion of the container 12. Accordingly, the conveying input step is completed.

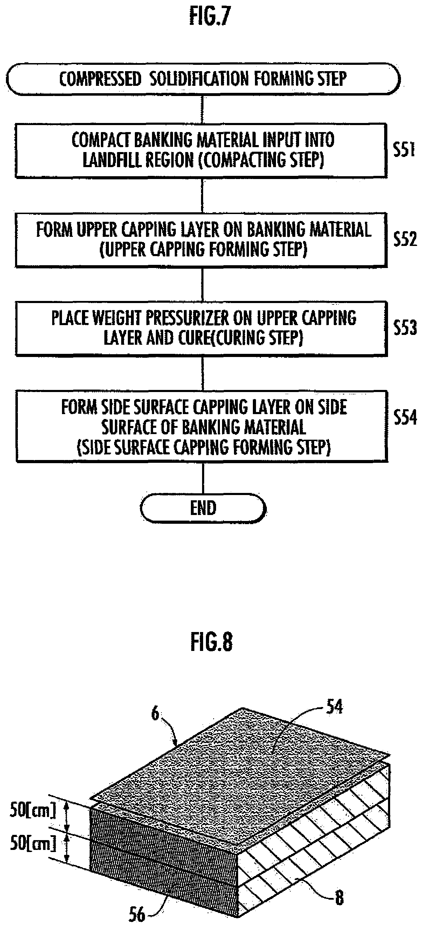

As illustrated in FIG. 5, when the conveying input step (step S4) is completed, a compressed solidification forming step (step S5) is performed so as to form the compressed solidification 6 of the banking material 8 in the landfill region 7 into which the banking material 8 is input. In the compressed solidification forming step, as illustrated in FIG. 7, a compacting step (step S51) is first performed so as to compact the banking material 8 input into the landfill region 7.

The step of compacting the banking material 8 is performed twice while, for example, the placement height of the banking material 8 is set to 50 [cm] every time. Accordingly, as illustrated in FIG. 8, the banking material 8 which is compacted at the height of 1 [m] is formed in the landfill region 7.

Next, an upper capping forming step (step S52) is performed so as to form an upper capping layer 54 in a manner such that a coating material as a cement kneaded material is leveled on the compacted banking material 8 and crushed stone is leveled and compacted on the leveled coating material.

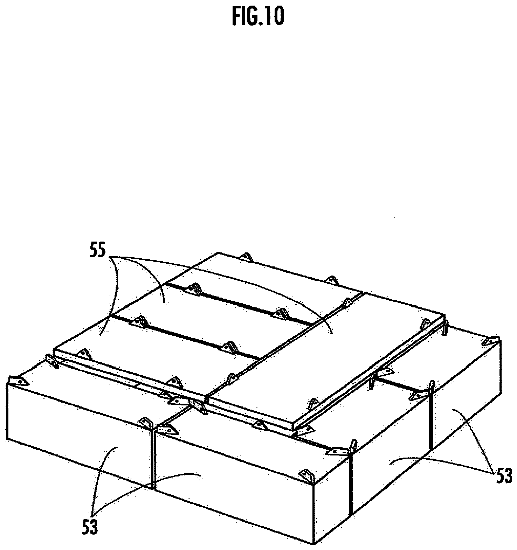

Next, as illustrated in FIGs. 9 and 10, a curing step (step S53) is performed so as to place eight weight pressurizers 55 on the upper capping layer 54 formed in the upper capping forming step and to cure the upper capping layer 54 and the banking material 8 therebelow for a predetermined curing period. The weight of eight weight pressurizers 55 is about 120 ton in total. The pressurization period of the weight pressurizer 55 is about 1 week.

A side surface capping forming step (step S54) is performed so as to form a side surface capping layer 56 in a manner such that the weight pressurizer 55 and the dam 53 are removed after the curing step and the side surface of the banking material 8 contacting the dam 53 is painted thickly. Accordingly, the compressed solidification 6 illustrated in FIG. 8 is formed, the compressed solidification forming step is completed, and the compressed solidification construction process of FIG. 5 ends. When the compressed solidification construction process is repeatedly performed in each landfill region 7 so as to construct the compressed solidifications 6 inside the landfill area 3, the landfill disposal of the mercury containing waste can be performed.

As described above, according to the embodiment, the banking material 8 is prepared in a manner such that the wastes conveyed into the cement kneading room 9 are kneaded by adding with cement and water in an air-tight maintained state in the compressed solidification construction process of FIG. 5. Accordingly, it is possible to prevent a problem in which the mercury element contained in the mercury containing wastes is scattered to the outside of the cement kneading room 9 during the kneading operation and the scattered mercury element gives a bad influence on the operator inside the final disposal site 1 or on the periphery of the final disposal site.

Further, since the landfill disposal of the mercury containing wastes is performed in the form of the compressed solidification that is formed by the banking material 8 in which the mercury containing wastes are kneaded with cement and water, it is possible to prevent the mercury contained in the mercury containing wastes from leaking to the outside of the landfill area 3 as much as possible after the landfill disposal.

Further, in the conveying input step (S4, FIG 6) of the compressed solidification construction process, the banking material 8 which is prepared in the cement kneading room 9 is transferred to the container 12 and is conveyed to the landfill region 7 by the ceiling hoist 18, and the banking material is input from the container 12 into the landfill region 7. Accordingly, it is possible to efficiently and safely input the banking material 8 prepared in the cement kneading room 9 into the landfill region 7.

Further, since the landfill area 3 is defined by the side wall portion 2 and the RC layer 31 as described above, it is possible to hold and keep the compressed solidification 6 constructed in the landfill region 7 while reliably suppressing the rainwater from intruding into the landfill area 3 by the side wall portion 2, the second waterproof structure 46, and the building 5. At that time, it is possible to effectively suppress the leachate or the like from leaking from the compressed solidification 6 including the mercury containing wastes inside the landfill area 3 to the ground 29 by the second waterproof structure 46, the RC layer 31, and the first waterproof structure 30. Then, it is possible to stably keep the landfill area 3 by the tough RC layer 31 and the tough side wall portion 2.

For this reason, even when earthquake or the like occurs, it is possible to protect the landfill area 3 while reliably keeping the waterproof effect and the water barrier effect of the first waterproof structure 30 or the second waterproof structure 46. Accordingly, it is possible to reliably perform the landfill disposal of the mercury containing wastes without giving an influence on the peripheral environment.

Further, since the induction joints 38 of the reinforced concrete layers 37 are deviated, the crack which is induced by the induction joint 38 may be generated at different positions instead of a specific position. Accordingly, it is possible to keep the toughness of the RC layer 31 by preventing generation of the fault of the RC layer 31 in the entire thickness direction regardless of the crack. Further, it is possible to effectively give the water barrier property to the RC layer 31 and to keep the water barrier property regardless of the crack by the expandable joint material 39.

Further, the concave area 50 is formed in which the vertical wall 44 of the peripheral edge of the RC layer 31, the side wall portion 2, and the RC layer 31 are opened upward and the inside is covered by the second waterproof structure 46, and the concave area 50 is provided with the catch basin 51 which collects and discharges water intruding thereinto. Accordingly, the concave area 50 serves as a buffer area which suppresses the rainwater from intruding into the landfill area 3 and suppresses the mercury element from leaking from the landfill area 3 to the outside of the building 5. Thus, it is possible to highly reliably ensure the shielding property for the landfill area 3.

Further, the concave area 50 is formed so as to surround the outside of the side wall portion 2 of the landfill area 3 and the traveling path 19 is provided on the second waterproof structure 46 of the bottom portion of the concave area 50 so that the ceiling hoist 18 travels along the traveling path. Accordingly, the concave area 50 may be used as an area for providing the traveling path 19 of the ceiling hoist 18 while serving as the buffer area.

Thus, the ceiling hoist 18 may be easily employed as a unit for conveying the banking material 8 for forming the compressed solidification 6 while ensuring the high shielding property of the landfill area 3 and the building 5 with high reliability. Accordingly, it is possible to provide the final disposal site 1 in which the landfill disposal of the mercury containing wastes is appropriately performed in the form of the compressed solidification 6.

Further, the first waterproof structure 30 includes the first subslab concrete 32 which is provided on the ground, the waterproof unit 33 which is provided thereabove, and the second subslab concrete 34 which is placed thereon, and the waterproof unit 33 includes the water barrier sheet 35 and the protection mats 36 which interpose the water barrier sheet therebetween. Then, since the RC layer 31 of which the fault is prevented in the entire thickness direction is formed on the first waterproof structure 30 and the water barrier sheet 35 is further protected by the protection mat 36, it is possible to reliably keep the water barrier property of the waterproof unit 33.

Further, since the second waterproof structure 46 includes the water repellent layer 47, the waterproof layer 48 at the outside thereof, and the non-combustible coating 49 covering the waterproof layer 48, it is possible to keep the waterproof effect of the water repellent layer 47 and the waterproof layer 48 while preventing a fire accident or the like by the non-combustible coating 49.

While the embodiment of the invention has been described, the invention is not limited thereto. For example, the invention may be also applied to wastes other than the mercury containing wastes, for example, radioactive wastes if the wastes require the high water proof property, the high water barrier property, and the firm landfill area similarly to the mercury containing wastes. Further, the invention is not limited to the final disposal of wastes, and may be used in an intermediate disposal site in the case of the radioactive wastes or the like.

### EXPLANATIONS OF LETTERS OR NUMERALS

- 1:: Final disposal site
- 2:: Side wall portion
- 3:: Landfill area
- 4:: Bottom plate structure
- 5:: Building
- 6:: Compressed solidification
- 7:: Landfill region
- 8:: Banking material
- 18:: Ceiling hoist
- 19:: Traveling path
- 29:: Ground
- 30:: First waterproof structure
- 31:: RC layer
- 32:: First subslab concrete (first concrete layer)
- 33:: Waterproof unit
- 34:: Second subslab concrete (second concrete layer)
- 35:: Water barrier sheet
- 36:: Protection mat
- 37:: Reinforced concrete layer
- 38:: Induction joint
- 39:: Expandable joint material
- 40:: Main reinforcement
- 44:: Vertical wall
- 46:: Second waterproof structure
- 47:: Water repellent layer
- 48:: Waterproof layer
- 49:: Non-combustible coating
- 50:: Concave area
- 51:: Catch basin
- 53:: Dam
- 54:: Upper capping layer
- 55:: Weight pressurizer
- 56:: Side surface capping layer

## Claims

1. A final disposal site comprising:
a landfill area (3)in which a plurality of landfill regions (7) are set so that a banking material (8) including wastes is input and a compressed solidification (6) of the banking material (8) is sequentially formed, and a periphery thereof is defined by a side wall portion (2); and
a building (5) which accommodates the landfill area and a bottom portion thereof being configured by a bottom plate structure (4),
wherein the bottom plate structure (4) includes a first waterproof structure (30) which is provided on a ground (29) and an RC layer (31) which is provided on the first waterproof structure (30) so as to define a bottom of the landfill area (3),
wherein the first waterproof structure (30) includes concrete (32, 34) and a waterproof unit (33),
wherein the side wall portion (2) is formed as a part integrated with the RC layer (31) by reinforcement concrete using a reinforcement uprightly formed from the RC layer (31) as a main reinforcement (10),
wherein a surface of the integrated part is covered by a second waterproof structure (46),
wherein a peripheral edge of the RC layer (31) is provided with a vertical wall (34) which is uprightly formed from the RC layer (31) so as to be integrated with the RC layer (31),
wherein a lower end surface of a side wall (57) of the building (5) is connected to an upper end surface of the vertical wall (44),
wherein the second waterproof structure (46) extends to an inner surface of the vertical wall (44),
wherein the vertical wall (44), the side wall portion (2), and the RC layer (31) form a concave area (50) of which an upside is opened and an inside is covered by the second waterproof structure (46), and
wherein a traveling path (19) along which a ceiling hoist (18) transporting the banking material (8) forming the compressed solidification (6) to the landfill region (7) travels is provided on the second waterproof structure (46) of a bottom portion of the concave area (50).

2. The final disposal site according to claim 1,
wherein the concave area (50) is provided with a catch basin (51) which collects and discharges water intruding thereinto.

3. The final disposal site according to claim 1,
wherein the RC layer (31) includes a plurality of reinforced concrete layers (37) sequentially constructed from a lower layer side through each curing period, and
wherein the side wall portion (2) is formed simultaneously with the reinforced concrete layer so as to be integrated with an uppermost reinforced concrete layer (37) of the RC layer (31) by reinforcement concrete using a reinforcement uprightly extending from a bottom portion of the RC layer (31) as a main reinforcement (40).

4. The final disposal site according to claim 3,
wherein each reinforced concrete layer of the RC layer (31) is provided with an induction joint (38) of which an upper surface is provided with an expandable joint material (39), and the induction joints (38) of each of the reinforced concrete layers (37) are disposed at different positions in a direction parallel to the upper surfaces thereof.

5. The final disposal site according to any one of claims 1 to 4,
wherein the first waterproof structure (30) includes
a first concrete layer (32) which is put on the ground (29),
the waterproof unit (33) which is provided on the first concrete layer (32), and
a second concrete layer (34) which is put on the waterproof unit (33), and
wherein the waterproof unit (33) includes a water barrier sheet (35) and two protection mats (36) which interpose the water barrier sheet (35) therebetween.

6. The final disposal site according to any one of claims 1 to 5,
wherein the second waterproof structure (46) includes an innermost water repellent layer (47), a waterproof layer (48) which is formed by performing an FRP waterproof treatment on an outside of the water repellent layer (47), and a non-combustible coating (49) which covers the waterproof layer (48).

7. A waste disposal method of performing landfill disposal of wastes by sequentially constructing a compressed solidification (6) of a banking material (8) including the wastes by a compressed solidification construction process in a plurality of landfill regions (7) inside a landfill area (3) formed on a bottom plate structure (4) of a building (5) of a final disposal site so that a periphery thereof is defined by a side wall portion (2) while having a predetermined length, a predetermined width, and a predetermined height,
wherein the bottom plate structure (4) includes a first waterproof structure (30) formed on a ground (29) by a concrete (32, 34) and a waterproof unit (33), and an RC layer (31) defining a bottom of the landfill area (3),
wherein the RC layer (31) includes a plurality of reinforced concrete layers (37) sequentially constructed on the first waterproof structure (30) from a lower layer side through each curing period,
wherein the side wall (2) portion is formed simultaneously with the reinforced concrete layer so as to be integrated with an uppermost reinforced concrete layer (37) of the RC layer (31) by reinforcement concrete using a reinforcement uprightly formed from a bottom portion of the RC layer (31) as a main reinforcement (40),
wherein a ceiling hoist (18) is provided inside the building (5),
wherein a surface of the integrated part is covered by a second waterproof structure (46),
wherein the compressed solidification construction process includes
a waste conveying step (S1) of conveying wastes into a cement kneading room (9) which is provided inside the building (5) and of which an exit and an entrance are capable of being air-tightly closed so as to keep an air-tight state,
a banking material (8) preparing step (S2) of preparing the banking material (8) by kneading mercury containing wastes conveyed into the air-tight cement kneading room (9) in the waste conveying step (S1) while adding cement and water to the mercury containing wastes,
a dam disposing step (S3) of disposing a dam (53) at an opened side surface of the landfill region (7) where the compressed solidification (6) is to be formed so that the dam closes the side surface,
a conveying input step (S4) of conveying the banking material (8) prepared in the banking material (8) preparing step (S2) from the cement kneading room (9) so as to input the banking material (8) into the landfill region (7) where the dam (53) is disposed in the dam disposing step (S3), and
a compressed solidification forming step (S5) of forming the compressed solidification of the banking material (8) in the landfill region (7) into which the banking material (8) is input in the conveying input step (S4), and
wherein the conveying input step includes
a transfer step (S41) of transferring the banking material (8) prepared in the banking material (8) preparing step to a container (12),
a conveying step (S42) of conveying the container (12) to a delivery position of the ceiling hoist (18) outside the cement kneading room (9) after the transfer step (S41),
a transporting step (S43) of transporting the container (12) conveyed to the delivery position in the conveying step (S42) to the landfill region (7) where the dam (53) is disposed in the dam disposing step (S3) by use of the ceiling hoist (18), and
an input step (S44) of inputting the banking material (8), which is inside the container (12) and which has been transported to the landfill region (7) in the transporting step (S43), into the landfill region (7).

8. The waste disposal method according to claim 7,
wherein the compressed solidification forming step (S5) includes
a compacting step (S51) of compacting the banking material (8) input into the landfill region (7) in the conveying input step (S4),
an upper capping forming step (S52) of forming an upper capping layer (54) by leveling a coating material composed of a cement kneaded material on the banking material (8) compacted in the compacting step (S51) and leveling and compacting crushed stone on the leveled coating material,
a curing step (S53) of placing a weight pressurizer (55) on the upper capping layer (54) formed in the upper capping forming step (52) and curing the upper capping layer (54) and the banking material (8) therebelow for a predetermined curing period, and
a side surface capping forming step (S54) of forming a side surface capping layer (56) by removing the weight pressurizer (55) and the dam (53) after the curing step (S53) and thickly painting a surface of the banking material (8) which was contacting the dam (53).

9. The waste disposal method according to claim 7 or 8,
wherein induction joints (38) provided with an expandable joint material (39) are disposed on upper surfaces of each of the reinforced concrete layers (37) of the RC layer (31) so as to be located at different positions in a direction following the upper surfaces among the reinforced concrete layers (37).

## Patentansprüche

1. Endlagerstätte, umfassend:
einen Deponiebereich (3), in dem eine Mehrzahl von Deponiezonen (7) so gesetzt ist, dass ein Aushubmaterial (8), das Abfälle aufweist, eingebracht wird und eine komprimierte Verfestigung (6) des Aushubmaterials (8) sequentiell gebildet wird, und eine Peripherie davon durch einen Seitenwandabschnitt (2) definiert wird; und
ein Gebäude (5), das den Deponiebereich aufnimmt, und wobei ein Bodenabschnitt davon durch eine Bodenplattenstruktur (4) ausgelegt ist,
wobei die Bodenplattenstruktur (4) eine erste wasserdichte Struktur (30), die auf einem Boden (29) vorgesehen ist, und eine RC-Schicht (31), die auf der ersten wasserdichten Struktur (30) vorgesehen ist, aufweist, um so einen Boden des Deponiebereichs (3) zu definieren,
wobei die erste wasserdichte Struktur (30) Beton (32, 34) und eine wasserdichte Einheit (33) aufweist,
wobei der Seitenwandabschnitt (2) als Teil gebildet ist, der mit der RC-Schicht (31) durch bewehrten Beton unter Verwendung einer Bewehrung als Hauptarmierung (10) integriert ist, die aufrecht abstehend von der RC-Schicht (31) ausgebildet ist,
wobei eine Fläche des integrierten Teils von einer zweiten wasserdichten Struktur (46) bedeckt ist,
wobei ein peripherer Rand der RC-Schicht (31) mit einer vertikalen Wand (34) versehen ist, die aufrecht abstehend von der RC-Schicht (31) ausgebildet ist, um so mit der RC-Schicht (31) integriert zu sein,
wobei eine untere Endfläche einer Seitenwand (57) des Gebäudes (5) mit einer oberen Endfläche der vertikalen Wand (44) verbunden ist,
wobei sich die zweite wasserdichte Struktur (46) zu einer Innenfläche der vertikalen Wand (44) erstreckt,
wobei die vertikale Wand (44), der Seitenwandabschnitt (2) und die RC-Schicht (31) einen konkaven Bereich (50) bilden, von dem eine Oberseite geöffnet ist und eine Innenseite von der zweiten wasserdichten Struktur (46) bedeckt ist, und
wobei ein Bewegungsweg (19), entlang dessen sich ein Deckenlift (18) bewegt, der das Aushubmaterial (8), das die komprimierte Verfestigung (6) bildet, zur Deponiezone (7) transportiert, auf der zweiten wasserdichten Struktur (46) eines Bodenabschnitts des konkaven Bereichs (50) vorgesehen ist.

2. Endlagerstätte nach Anspruch 1,
wobei der konkave Bereich (50) mit einem Auffangbecken (51) versehen ist, das darin eindringendes Wasser sammelt und abführt.

3. Endlagerstätte nach Anspruch 1,
wobei die RC-Schicht (31) eine Mehrzahl bewehrter Betonschichten (37) aufweist, die sequentiell ausgehend von einer unteren Schichtseite durch eine jeweilige Aushärtungsperiode konstruiert sind, und wobei der Seitenwandabschnitt (2) gleichzeitig mit der bewehrten Betonschicht gebildet wird, um so mit einer obersten bewehrten Betonschicht (37) der RC-Schicht (31) durch bewehrten Beton unter Verwendung einer Bewehrung als Hauptarmierung (40) integriert zu sein, die sich von einem Bodenabschnitt der RC-Schicht (31) aufrecht abstehend erstreckt.

4. Endlagerstätte nach Anspruch 3,
wobei jede bewehrte Betonschicht der RC-Schicht (31) mit einer Einführungsfuge (38) versehen ist, von der eine obere Fläche mit einem expandierbaren Verbindungsmaterial (39) versehen ist, und die Einführungsfugen (38) jeder der verstärkten Betonschichten (37) an verschiedenen Positionen in einer Richtung parallel zu den oberen Flächen davon angeordnet sind.

5. Endlagerstätte nach einem der Ansprüche 1 bis 4, wobei die erste wasserdichte Struktur (30) umfasst:
eine erste Betonschicht (32), die auf den Boden (29) aufgebracht ist,
die wasserdichte Einheit (33), die auf der ersten Betonschicht (32) vorgesehen ist, und
eine zweite Betonschicht (34), die auf die wasserdichte Einheit (33) aufgebracht ist, und
wobei die wasserdichte Einheit (33) eine Wassersperrschicht (35) und zwei Schutzmatten (36) aufweist, welche die Wassersperrschicht (35) dazwischen anordnen.

6. Endlagerstätte nach einem der Ansprüche 1 bis 5,
wobei die zweite wasserdichte Struktur (46) eine innerste wasserabstoßende Schicht (47), eine wasserdichte Schicht (48), die durch Vornehmen einer wasserdicht machenden FRP-Behandlung an der Außenseite der wasserabstoßenden Schicht (47) gebildet ist, und eine nicht-brennbare Beschichtung (49), welche die wasserdichte Schicht (48) bedeckt, aufweist.

7. Abfallentsorgungsverfahren zum Vornehmen einer Deponieentsorgung von Abfällen durch sequentielles Konstruieren einer komprimierten Verfestigung (6) eines Aushubmaterials (8), das die Abfälle aufweist, durch ein komprimiertes Verfestigungskonstruktionsverfahren in einer Mehrzahl von Deponiezonen (7) innerhalb eines Deponiebereichs (3), der auf einer Bodenplattenstruktur (4) eines Gebäudes (5) einer Endlagerstätte gebildet wird, so dass eine Peripherie davon durch einen Seitenwandabschnitt (2) definiert wird, während diese eine vorherbestimmte Länge, eine vorherbestimmte Breite und eine vorherbestimmte Höhe aufweist,
wobei die Bodenplattenstruktur (4) eine erste wasserdichte Struktur (30), die auf einem Boden (29) durch einen Beton (32, 34) und eine wasserdichte Einheit (33) vorgesehen ist, und eine RC-Schicht (31), die einen Boden des Deponiebereichs (3) definiert, aufweist,
wobei die RC-Schicht (31) eine Mehrzahl verstärkter Betonschichten (37) aufweist, die sequentiell auf der ersten wasserdichten Struktur (30) aus einer unteren Schichtseite durch jede Härtungsperiode konstruiert werden,
wobei der Seitenwandabschnitt (2) gleichzeitig mit der verstärkten Betonschicht gebildet wird, um so mit einer obersten verstärkten Betonschicht (37) der RC-Schicht (31) durch bewehrten Beton unter Verwendung einer Bewehrung als Hauptarmierung (40) integriert zu werden, die aufrecht abstehend von einem Bodenabschnitt der RC-Schicht (31) ausgebildet wird,
wobei ein Deckenlift (18) innerhalb des Gebäudes (5) vorgesehen ist,
wobei eine Fläche des integrierten Teils durch eine zweite wasserdichte Struktur (46) bedeckt wird,
wobei das Komprimierte Verfestigungskonstruktionsverfahren umfasst:
einen Abfallförderschritt (S1) zum Befördern von Abfällen in einen Zementknetraum (9), der innerhalb des Gebäudes (5) vorgesehen ist und von dem ein Ausgang und ein Eingang luftdicht verschlossen werden können, um einen luftdichten Zustand aufrechtzuerhalten,
einen Aushubmaterial (8)-Vorbereitungsschritt (S2) zum Vorbereiten des Aushubmaterials (8) durch Kneten quecksilberhaltiger Abfälle, die in den luftdichten Zementknetraum (9) in dem Abfallförderschritt (S1) befördert werden, während Zement und Wasser den quecksilberhaltigen Abfällen zugesetzt werden,
einen Dammanordnungsschritt (S3) zum Anordnen eines Damms (53) an einer geöffneten Seitenfläche der Deponiezone (7), wo die komprimierte Verfestigung (6) zu bilden ist, so dass der Damm die Seitenfläche verschließt,
einen Fördereinbringungsschritt (S4) zum Befördern des Aushubmaterials (8), das in dem Aushubmaterial (8)-Vorbereitungsschritt (S2) vorbereitet wird, aus dem Zementknetraum (9), um so das Aushubmaterial (8) in die Deponiezone (7) einzubringen, wo der Damm (53) in dem Dammanordnungsschritt (S3) angeordnet wird, und
einen Kompressions-Verfestigungsbildungsschritt (S5) zum Bilden der komprimierten Verfestigung des Aushubmaterials (8) in der Deponiezone (7), in die das Aushubmaterial (8) in dem Fördereinbringungsschritt (S4) eingebracht wird, und
wobei der Fördereinbringungsschritt umfasst:
einen Transferschritt (S41) zum Transferieren des Aushubmaterials (8), das in dem Aushubmaterial (8)-Vorbereitungsschritt vorbereitet wird, zu einem Behälter (12),
einen Förderschritt (S42) zum Befördern des Behälters (12) in eine Abgabeposition des Deckenlifts (18) außerhalb des Zementknetraums (9) nach dem Transferschritt (S41),
einen Transportschritt (S43) zum Transportieren des Behälters (12), der in die Abgabeposition in dem Förderschritt (S42) befördert wurde, zur Deponiezone (7), wo der Damm (53) in dem Dammanordnungsschritt (S3) angeordnet wird, unter Verwendung des Deckenlifts (18), und
einen Einbringungsschritt (S44) zum Einbringen des Aushubmaterials (8), das innerhalb des Behälters (12) ist und das zu der Deponiezone (7) in dem Transportschritt (S43) befördert wurde, in die Deponiezone (7).

8. Abfallentsorgungsverfahren nach Anspruch 7,
wobei der Kompressions-Verfestigungsbildungsschritt (S5) umfasst:
einen Kompaktierungsschritt (S51) zum Kompaktieren des Aushubmaterials (8), das in die Deponiezone (7) in dem Fördereinbringungsschritt (S4) eingebracht wird,
einen oberen Kappenbildungsschritt (S52) zum Bilden einer oberen Kappenbildungsschicht (54) durch Einebnen eines Beschichtungsmaterials, das aus einem zementgekneteten Material besteht, auf dem Aushubmaterial (8), das in dem Kompaktierungsschritt (S51) kompaktiert worden ist, und Einebnen und Kompaktieren von Schotter auf dem eingeebneten Beschichtungsmaterial,
einen Aushärtungsschritt (S53) durch Platzieren eines Gewichtsdruckhalters (55) auf der oberen Kappenbildungsschicht (54), die im oberen Kappenbildungsschritt (52) gebildet worden ist, und Aushärten der oberen Kappenbildungsschicht (54) und des Aushubmaterials (8) darunter während einer vorherbestimmten Aushärtungsperiode, und
einen Seitenflächen-Kappenbildungsschritt (S54) zum Bilden einer Seitenflächen-Kappenbildungsschicht (56) durch Entfernen des Gewichtsdruckhalters (55) und des Damms (53) nach dem Härtungsschritt (S53) und dickes Anstreichen einer Fläche des Aushubmaterials (8), die mit dem Damm (53) in Kontakt gestanden ist.

9. Abfallentsorgungsverfahren nach Anspruch 7 oder 8,
wobei Einführungsfugen (38), die mit einem expandierbaren Verbindungsmaterial (39) versehen sind, auf oberen Flächen jeder der verstärkten Betonschichten (37) der RC-Schicht (31) angeordnet werden, um so an verschiedenen Positionen in der Richtung folgend den oberen Flächen unter den verstärkten Betonschichten (37) angeordnet zu sein.

## Revendications

1. Site de stockage définitif comprenant :
une zone d'enfouissement (3) dans laquelle plusieurs régions d'enfouissement (7) sont positionnées de sorte qu'un matériau de remblai (8) renfermant des déchets soit introduit, qu'un produit de solidification comprimé (6) du matériau de remblai soit formé de façon séquentielle, et que sa périphérie soit définie par une partie de paroi périphérique (2), et
une construction (5) qui reçoit la zone d'enfouissement et dont le fond est constitué par une structure de plaque inférieure (4),
la structure de plaque inférieure (4) comprenant une première structure imperméable (30) qui est située sur le sol (29), et une couche en béton armé (31) qui est située sur la première structure imperméable à l'eau (30) pour définir le fond de la zone d'enfouissement (3),
la première structure imperméable (30) renfermant du béton (32, 34) et une unité imperméable à l'eau (33),
la partie de paroi latérale (2) étant réalisée en tant que partie intégrée avec la couche en béton armé (31) par du béton armé en utilisant un renfort formé vers le haut à partir de la couche en béton armé (31) en tant que renfort principal (10),
la surface de la partie intégrée étant recouverte par une seconde structure imperméable (46),
le bord périphérique de la couche en béton armé (31) comportant une paroi verticale (34) qui est formée vers le haut à partir de la couche en béton armé (31) pour être intégrée à cette couche en béton armé (31),
la surface d'extrémité inférieure de la paroi latérale (57) de la construction (5) étant reliée à la surface d'extrémité supérieure de la paroi verticale (44),
la seconde structure imperméable (46) s'étendant vers la surface interne de la paroi verticale (44),
la paroi verticale (44), la partie de paroi latérale (2) et la couche en béton armé (31) formant une zone concave (50) dont le côté supérieur est ouvert et dont l'intérieur est recouvert par la seconde structure imperméable (46), et
un chemin de déplacement (19) le long duquel un module de levage (18) transporte le matériau de remblai (8) permettant le déplacement du produit de solidification comprimé (6) vers la région d'enfouissement (7) étant situé sur la seconde structure imperméable (46) de la partie inférieure de la zone concave (50).

2. Site de stockage définitif conforme à la revendication 1, dans lequel la zone concave (50) est équipée d'un bassin collecteur (51) qui collecte et décharge de l'eau introduite dans celui-ci.

3. Site de stockage définitif conforme à la revendication 1, dans lequel la couche en béton armé (31) comporte plusieurs couches en béton armé (37) construites séquentiellement à partir d'une couche inférieure dans chaque période de sédimentation, et
la partie de paroi latérale (2) est formée simultanément à la couche en béton armé de façon a être intégrée à la couche en béton armé supérieure (37) de la couche en béton armé (31) par du béton de renfort en utilisant un renfort s'étendant vers le haut à partir de la partie inférieure de la couche en béton armé (31) constituant le renfort principal (40).

4. Site de stockage définitif conforme à la revendication 3, dans lequel chaque couche en béton armé de la couche en béton armé (31) est équipée d'un joint d'insertion (38) dont la surface supérieure renferme un matériau de joint extensible (39) et les joints d'insertion (38) de chacune des couches en béton armé (37) sont situés dans différentes positions dans une direction parallèle à leur surface supérieure.

5. Site de stockage définitif conforme à l'une des revendications 1 à 4, dans lequel la première structure imperméable (30) comprend :
une première couche de béton (32) qui est appliquée sur le sol (29),
l'unité imperméable (33) qui est située sur la première couche de béton (32), et
une seconde couche de béton (34) qui est appliquée sur l'unité imperméable (33),
l'unité imperméable (33) comprenant un film formant barrière anti-eau (35) et deux nappes de protection (36) entre lesquelles le film formant barrière anti-eau (35) est pris en sandwich.

6. Site de stockage définitif conforme à l'une quelconque des revendications 1 à 5, dans lequel la seconde structure imperméable (46) comporte une couche hydrofuge la plus interne (47), une couche imperméable (48) qui est formée en mettant en oeuvre un traitement imperméable retardateur de flammes FRP sur le côté extérieur de la couche hydrofuge (47) et un revêtement non combustible (49) qui recouvre la couche imperméable (48).

7. Procédé de stockage de déchets permettant d'effectuer un stockage par enfouissement de déchets en construisant de manière séquentielle un produit de solidification par compression (6) d'un matériau de remblai (8) renfermant les déchets par un procédé d'obtention d'un produit de solidification comprimé dans plusieurs régions d'enfouissement (7) situées dans une zone d'enfouissement (3) formée sur une structure de plaque inférieure (4) d'une construction (5) d'un site de stockage définitif de sorte que sa périphérie soit définie par une partie de paroi latérale (2), ayant une longueur prédéfinie, une largeur prédéfinie et une hauteur prédéfinie,
la structure de plaque inférieure (4) comprenant une première structure imperméable (30) formée sur le sol (29) par du béton (32, 34) et une unité imperméable (33) et une couche en béton armé (31) définissant le fond de la zone d'enfouissement (3),
la couche en béton armé (31) comprenant plusieurs couches en béton armé (37) construites de manière séquentielle sur la première structure imperméable (30) à partir de la couche inférieure dans chaque période de sédimentation,
la partie de paroi latérale (2) étant formée simultanément à la couche de béton armé de manière a être intégrée à la couche en béton armé supérieure (37) de la couche en béton armé (31) par du béton de renfort en utilisant un renfort formé vers le haut à partir de la partie inférieure de la couche en béton armé (31) en tant que renfort principal (40),
un module de levage (18) étant situé à la partie interne de la construction (5),
la surface de la partie intégrée étant recouverte par une seconde structure imperméable (46),
le procédé d'obtention d'un produit de solidification comprimé comprenant des étapes constituées par :
une étape de transport de déchets (S1) consistant à transporter des déchets dans un espace de malaxage de ciment (9) situé dans la construction (5) et dont une sortie et une entrée sont susceptibles d'être fermées de façon étanche à l'air de façon à maintenir un état imperméable à l'air,
une étape (S2) de préparation d'un matériau de remblai (8) consistant à préparer le matériau de remblai (8) en pétrissant des déchets renfermant du mercure transportés dans l'espace de malaxage de ciment étanche à l'air (9) lors de l'étape de transport de déchets (S1) en ajoutant du ciment et de l'eau aux déchets renfermant du mercure,
une étape (S3) de mise en place d'un barrage (53) consistant à mettre en place un barrage (53) sur la surface du côté ouvert de la région d'enfouissement (7) où le produit de solidification comprimé (6) doit être formé de sorte que le barrage ferme sa surface latérale,
une étape de transport (S4) consistant à transporter le matériau de remblai (8) préparé lors de l'étape (S2) de préparation du matériau de remblai (8) dans l'espace de malaxage de ciment (9) de façon à introduire le matériau de remblai (8) dans la région d'enfouissement (7) où le barrage (53) est mis en place lors de l'étape de mise en place du barrage (S3), et
une étape de formation du produit de solidification comprimé (S5) consistant à former le produit de solidification comprimé du matériau de remblai (8) dans la région d'enfouissement (7) dans laquelle le matériau de remblai (8) est introduit lors de l'étape de transport (S4), et
l'étape de transport comprenant :
une étape de transfert (S41) consistant à transférer le matériau de remblai (8) préparé lors de l'étape de préparation du matériau de remblai (8) dans un conteneur (12),
une étape de convoyage (S42) consistant à convoyer le conteneur (12) vers une position de distribution du module de levage (18) à l'extérieur de l'espace de malaxage de ciment (9) après l'étape de transfert (S41),
une étape de transport (S43) consistant à transporter le conteneur (12) convoyé vers la position de distribution lors de l'étape de convoyage (S42) vers la région d'enfouissement (7) où la barrière (53) mise en place lors de l'étape de mise en place de la barrière (S3) en utilisant le module de levage (18), et
une étape d'introduction (S44) consistant à introduire le matériau de remblai (8) situé à la partie interne du conteneur (12) et qui a été transporté vers la région d'enfouissement (7) lors de l'étape de transport (S43) dans la région d'enfouissement (7).

8. Procédé de stockage de déchets conforme à la revendication 7, selon lequel l'étape consistant à former le produit de solidification comprimé (S5) comprend :
une étape de compactage (S51) consistant à compacter le matériau de remblai (8) introduit dans la région d'enfouissement (7) lors de l'étape de transport (S4),
une étape de formation d'un recouvrement supérieur (S52) consistant à former une couche de recouvrement supérieure (54) en nivelant un matériau de revêtement composé d'un matériau de malaxage de ciment sur le matériau de remblai (8) compacté lors de l'étape de compactage (S51) et à niveler et compacter de la pierre concassée sur le matériau de revêtement nivelé,
une étape de sédimentation (S53) consistant à placer un élément de compression par poids (55) sur le couche de recouvrement supérieure (54) formée lors de l'étape de formation du recouvrement supérieur (52) et à durcir la couche de recouvrement supérieure (54) et le matériau de remblai (8) situé au dessous pendant une période de sédimentation prédéfinie, et
une étape de formation d'un recouvrement de surface latéral (S54) consistant à former une couche de recouvrement de surface latérale (56) en enlevant l'élément de compression par poids (55) et la barrière (53) après l'étape de sédimentation (S53) et à appliquer une peinture épaisse sur la surface du matériau de remblai (8) qui était en contact avec la barrière (53).

9. Procédé de stockage de déchets, conforme à la revendication 7 ou 8, selon lequel des joints d'insertion (38) renfermant un matériau de joint extensible (39) sont appliqués sur les surfaces supérieures de chacune des couches en béton armé (37) de la couche en béton armé (31) de façon a être situés dans différentes positions dans une direction suivant les surfaces supérieures des couches de béton armé (37).
